# EUROPEAN PATENT APPLICATION

(11) **EP 4 397 612 A1**
(43) Date of publication of application: **10.07.2024**
(21) Application number: 23219236.9
(22) Date of filing: 21.12.2023
(51) Int. Cl.: B66B 1/32, B66B 5/00

(54) **DEVICE AND METHOD FOR IMPLEMENTING AN ELEVATOR SAFETY FUNCTION**

(30) Priority: 03.01.2023 CN 202310007053
(71) Applicant: Otis Elevator Company, Farmington, Connecticut 06032 (US)
(72) Inventor: Li, Guosong, Tianjin, 300457 (CN)
(74) Representative: Schmitt-Nilson Schraud Waibel Wohlfrom Patentanwälte Partnerschaft mbB

(57) **Abstract**

The present application relates to elevator safety technology, in particular to a device and method for implementing an elevator safety function. According to an aspect of the present application, there is provided a device for implementing an elevator safety function, comprising: a primary braking device configured to perform a holding brake operation when being de-energized; an auxiliary braking device configured to perform a holding brake operation when being de-energized; a safety function control unit selectively coupled with an elevator motor and configured to determine whether to activate the auxiliary braking device to perform the holding brake operation based on magnitude of back electromotive force of the elevator motor; and a switching device configured to couple the elevator motor with the safety function control unit after the primary braking device is de-energized.

## Description

### Technical field

The present application relates to elevator safety technology, in particular to a device and method for implementing an elevator safety function.

### Background

When an elevator is at a standstill, no current passes through coils of an electromagnetic elevator brake and a traction motor. At this time, since there is no attraction between electromagnetic cores, a brake component will hold a brake wheel tightly under pressure of a brake spring, thus ensuring that the motor does not rotate. Before the traction motor rotates, a coil in a brake electromagnet has current passing through, and the electromagnetic core is magnetized and absorbed rapidly, driving a brake arm to make the brake tile and the brake wheel completely detach, so that the elevator can run. When an elevator car reaches a landing station for stopping, the traction motor loses power, the coil in the brake electromagnet also loses power at the same time, the magnetic force in the electromagnetic core disappears rapidly, and the core is reset by the brake arm under the action of the brake spring, so that the brake tile holds the brake wheel again and the elevator stops working.

In an existing elevator system, in addition to using a primary braking device to provide holding brake function, an auxiliary braking device is also configured as redundant component. Activation of the auxiliary braking device is usually triggered by an overspeed switch of a speed governor. However, in some cases, the car has already experienced a long time and running distance before reaching an overspeed state, which makes the activation of the auxiliary braking device seriously delayed, thus bringing safety hazards.

### Summary

According to an aspect of the present application, there is provided a device for implementing an elevator safety function, comprising:
a primary braking device configured to perform a holding brake operation when being de-energized;
an auxiliary braking device configured to perform a holding brake operation when being de-energized;
a safety function control unit selectively coupled with an elevator motor and configured to determine whether to activate the auxiliary braking device based on magnitude of back electromotive force of the elevator motor; and
a switching device configured to couple the elevator motor with the safety function control unit after the primary braking device is de-energized.

Optionally, in the above device, the switching device comprises a relay, the relay comprises:
a relay coil connected in parallel with a holding brake coil of the primary braking device to a holding brake power supply;
a plurality of contacts connected with phase lines of the elevator motor and with the safety function control unit, wherein the contacts close immediately or close after experiencing a delay time when the relay coil is de-energized.

Optionally, in the above device, the delay time is set based on a maximum permissible travel distance of an elevator or a maximum permissible speed of the elevator motor at the time of failure of the primary braking device.

In addition to one or more of the above features, in the above device, the safety function control unit optionally comprises:
a rectifying circuit coupled with the phase lines of the elevator motor via the switching device;
a triggering unit coupled with the rectifying circuit configured to de-energize the auxiliary braking device if an output voltage of the rectifying circuit is greater than a set threshold.

Optionally, in the above device, the triggering unit comprises:
a first relay coupled with an output end of the rectifying circuit, which is configured to close or open the contacts in response to an event that the output voltage of the rectifying circuit is greater than the set threshold;
a second relay coupled with the first relay, which is configured to disconnect the holding brake coil of the auxiliary braking device from the holding brake power supply in response to closing or opening of the contact of the first relay.

Optionally, in the above device, the safety function control unit further comprises an overspeed switch of a speed governor, which is connected between the holding brake coil of the auxiliary braking device and the holding brake power supply and configured to disconnect a power supply of the auxiliary braking device when a speed of an elevator car exceeds a speed threshold.

According to another aspect of the present application, there is provided a device for implementing an elevator safety function, comprising:
a primary braking device configured to perform a holding brake operation when being de-energized;
an auxiliary braking device configured to perform a holding brake operation when being de-energized;
a safety function control unit coupled with an inverter module of an elevator drive, configured to obtain back electromotive force of an elevator motor from the inverter module after the primary braking device is de-energized and to determine, based on magnitude of the back electromotive force, whether to activate the auxiliary braking device.

Optionally, in the above device, the safety function control unit obtains the back electromotive force from the inverter module immediately or obtains the back electromotive force from the inverter module after experiencing a delay time after the primary braking device is de-energized.

Optionally, in the above device, the delay time is set based on a maximum permissible travel distance of an elevator or a maximum permissible speed of the elevator motor at the time of failure of the primary braking device.

In addition to one or more of the above features, in the above device, the safety function control unit comprises:
a triggering unit coupled with the inverter module configured to de-energize the auxiliary braking device if an output voltage of the inverter module is greater than a set threshold.

Optionally, in the above device, the triggering unit comprises:
a first relay coupled with an output end of the inverter module, which is configured to close or open the contacts in response to an event that the output voltage of the inverter module is greater than the set threshold;
a second relay coupled with the first relay, which is configured to disconnect a holding brake coil of the auxiliary braking device from a holding brake power supply in response to closing or opening of the contact of the first relay.

According to another aspect of the present application, there is provided a method for implementing an elevator safety function, comprising:
de-energizing, in response to an elevator motor being de-energized, a primary braking device to perform a holding brake operation;
coupling a voltage measuring device with the elevator motor to obtain back electromotive force of the elevator motor in response to an event of the primary braking device being de-energized; and
determining whether to activate the auxiliary braking device based on magnitude of the back electromotive force.

Optionally, in the above method, a switching device is used to enable coupling between the voltage measuring device and the elevator motor after the primary braking device is de-energized, the switching device comprises a relay, the relay comprises:
a relay coil connected in parallel with a holding brake coil of the primary braking device to a holding brake power supply;
a plurality of contacts connected with phase lines of the elevator motor and with the voltage measuring device, wherein the contacts close immediately or close after experiencing a delay time when the relay coil is de-energized.

Optionally, in the above method, the delay time is set based on a maximum permissible travel distance of an elevator or a maximum permissible speed of the elevator motor at the time of failure of the primary braking device.

Optionally, in the above method, the voltage measuring device comprises an inverter module of an elevator drive.

Optionally, in the above method, the voltage measuring device comprises a rectifying circuit dedicated to measuring the back electromotive force.

In addition to one or more of the above features, in the above method, whether the auxiliary braking device is activated is determined in the following way: if a voltage measured by the voltage measuring device is greater than a set threshold, the auxiliary braking device is de-energized.

### Description of the drawings

The above and/or other aspects and advantages of the present application will be clearer and more easily understood from the following description of various aspects in conjunction with the accompanying drawings, in which the same or similar elements are denoted by the same reference numerals. The accompanying drawings include:
FIG. 1 is a schematic diagram of a device for implementing an elevator safety function in accordance with some embodiments of the present application.
FIG. 2 shows a specific example of the device shown in FIG. 1.
FIG. 3 shows another specific example of the device shown in FIG. 1.
FIG. 4 is a schematic diagram of a device for implementing an elevator safety function in accordance with some other embodiments of the present application.
FIG. 5 shows a specific example of the device shown in FIG. 4.
FIG. 6 shows another specific example of the device shown in FIG. 4.
FIG. 7 is a flowchart of a method for implementing an elevator safety function in accordance with some other embodiments of the present application.

### Detailed description

The present application is described more fully below with reference to the accompanying drawings, in which illustrative embodiments of the application are illustrated. However, the present application may be implemented in different forms and should not be construed as limited to the embodiments presented herein. The presented embodiments are intended to make the disclosure herein comprehensive and complete, so as to more comprehensively convey the protection scope of the application to those skilled in the art.

In this specification, terms such as "comprising" and "including" mean that in addition to units and steps that are directly and clearly stated in the specification and claims, the technical solution of the application does not exclude the presence of other units and steps that are not directly and clearly stated in the specification and claims.

Unless otherwise specified, terms such as "first" and "second" do not indicate the order of the units in terms of time, space, size, etc., but are merely used to distinguish the units.

It could be understood that expressions such as "connecting" or "coupling" a component to another component include cases where the component is directly connected to another component, as well as cases where the component is connected to another component via an intermediate component.

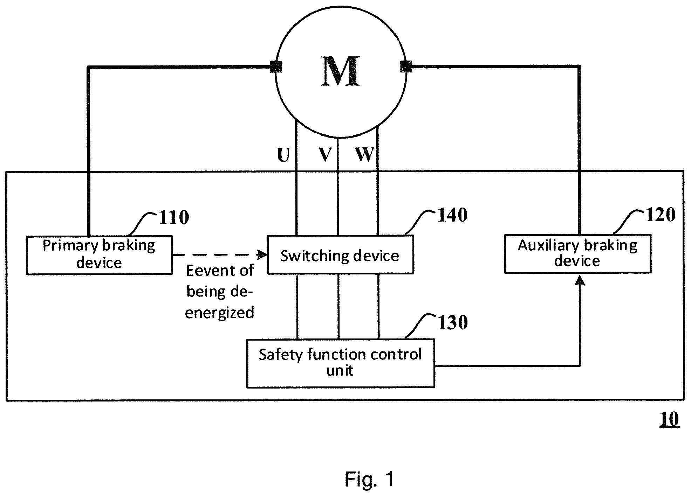

FIG. 1 is a schematic diagram of a device for implementing an elevator safety function in accordance with some embodiments of the present application.

A device 10 shown in FIG. 1 for implementing the an elevator safety function includes a primary braking device 110, an auxiliary braking device 120, a safety function control unit 130, and a switching device 140.

The primary braking device 110 and the auxiliary braking device 120 are actuators of the holding brake function. When an elevator motor M (e.g. traction motor) is de-energized, a power supply current of the primary braking device 110 is also disconnected, while the auxiliary braking device 120 remains powered (i.e., the auxiliary braking device 120 is not activated). It should be noted that two independent electrical devices or an integrated device can be used to synchronize the energizing and de-energizing of the elevator motor M and the primary braking device 110.

In the existing elevator system, especially when the car runs near the top and bottom stations, it is difficult to trigger the auxiliary braking device in time by means of devices such as a speed governor, etc., which means that when overspeed occurs near the top and bottom stations, it will take a longer distance to make a stop. On the other hand, since the top and bottom stations themselves are close to the top and bottom of the hoistway, the possibility of the elevator car crashing to the top or squatting to the bottom is greatly increased once the speed is exceeded. In some embodiments of the application, by using the back electromotive force of the elevator motor instead of the car speed as a parameter to monitor whether the primary braking device fails, the failure can be detected early so that the auxiliary braking device can be activated in time.

In some instances, the safety function control unit 130 is selectively coupled with the elevator motor M. In particular, when the elevator motor M and the primary braking device 110 are energized, the safety function control unit 130 is electrically isolated from the elevator motor M. On the other hand, when the elevator motor M and the primary braking device 110 are de-energized, the safety function control unit 130 is electrically coupled with the elevator motor M, thereby obtaining the back electromotive force of the elevator motor M in the de-energized state, and judging whether the primary braking device is effective and determining whether the auxiliary braking device 120 is activated based on the magnitude of this back electromotive force. Exemplarily, the safety function control unit may compare the back electromotive force of the elevator motor with a set threshold, judges that the primary braking device is not effective and thus activates the auxiliary braking device 120 if the back electromotive force is greater than the set threshold, and judges that the primary braking device is functioning normally and puts the auxiliary braking device 120 in a non-activated state if the back electromotive force is less than or equal to the set threshold.

In order to achieve selective coupling between the safety function control unit 130 and the elevator motor M, in some instances, the switching device 140 is provided between the safety function control unit 130 and the elevator motor M. When the primary braking device is de-energized, the switching device 140 is closed so that the safety function control unit 130 is coupled to phase lines U, V and W of the elevator motor M. On the other hand, when power is supplied to the primary braking device 110, the switching device 140 is opened so that the safety function control unit 130 is disconnected from the elevator motor M.

In some instances, once the primary braking device is de-energized, the switching device 140 is closed immediately so that the safety function control unit 130 is coupled to phase lines U, V and W of the elevator motor M. This means that the safety function control unit 130 starts detecting the back electromotive force of the motor as soon as the primary braking device is de-energized. But this approach is not necessary. In other instances, the switching device 140 may be closed after a delay time (e.g. 2 seconds) from the time the primary braking device is de-energized, that is, the safety function control unit 130 starts detecting the back electromotive force of the motor after a certain delay time after the primary braking device is de-energized. Optionally, the above delay time may be set based on a maximum permissible travel distance of the elevator or a maximum permissible speed of the elevator motor at the time of failure of the primary braking device.

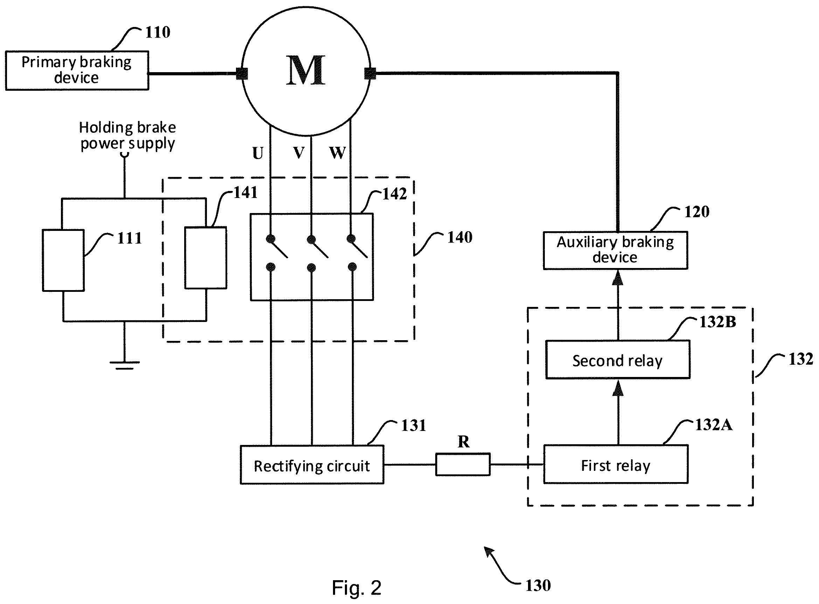

FIG. 2 shows a specific example of the device shown in FIG. 1. In the example shown in FIG. 2, the switching device 140 is implemented in the form of a relay. Referring to FIG. 2, the switching device or relay 140 includes a relay coil 141 and contacts 142. In order to link the switching device with the primary braking device, the relay coil 141 is connected in parallel with a holding brake coil 111 of the primary braking device 110 to a holding brake power supply, as shown in FIG. 2. Further, the contacts 142 are connected with the phase lines U, V, W of the elevator motor M and the safety function control unit 130. After the relay coil 141 is de-energized, the contacts 142 close immediately or close after experiencing a delay time, thus enabling the safety function control unit 130 to measure the back electromotive force of the elevator motor M.

The example shown in FIG. 2 also gives a specific implementation of the safety function control unit 130. As shown in FIG. 2, the safety function control unit 130 includes a rectifying circuit 131 and a triggering unit 132. The rectifying circuit 131 is coupled with the phase lines U, V, and W of the elevator motor M via the switching device or relay 140, which converts an AC voltage of the elevator motor to a DC voltage V. An output end of the rectifying circuit 131 is connected with the triggering unit 132 via a voltage divider and current limiting resistor R. The triggering unit 132 is configured to de-energize the auxiliary braking device if the output voltage V of the rectifying circuit 131 is greater than the set threshold TH, otherwise, to energize the auxiliary braking device.

Exemplarily, the above functions of the triggering unit may be implemented by the structure shown in FIG. 2. Specifically, the triggering unit 132 may comprise a first relay 132A and a second relay 132B. The control circuit of the first relay 132A is connected with the output end of the rectifying circuit 131 via the voltage divider and current limiting resistor R. When the output voltage V of the rectifying circuit is greater than the set threshold TH, it will cause the first relay 132A to generate a corresponding action, i.e., the output circuit or contacts is closed. The control circuit of the second relay 132B is connected with the output circuit of the first relay 132A and the output circuit is connected between a holding brake coil (not shown) of the auxiliary braking device 120 and a holding brake power supply (not shown), so when the output circuit of the first relay 132A or contacts is closed, it will cause the second relay 132B to generate a corresponding action, i.e., to break the connection between the holding brake coil of the auxiliary braking device 120 and the holding brake power supply. Optionally, when the output voltage V of the rectifying circuit is greater than the set threshold TH, the action generated by the first relay 132A may also be the opening of the output circuit or contacts.

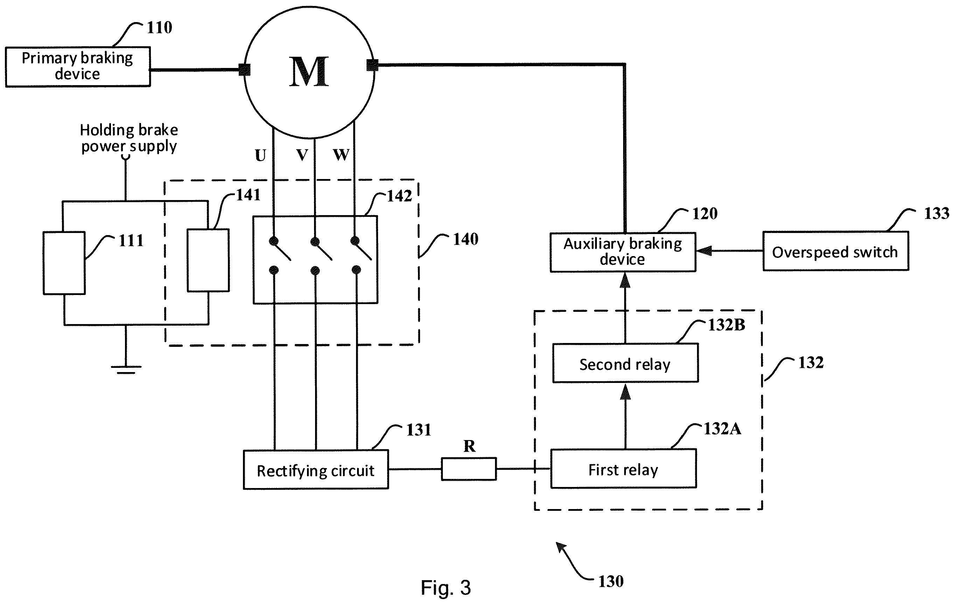

FIG. 3 shows another specific example of the device shown in FIG. 1. In contrast to the example shown in FIG. 2, in the device shown in FIG. 3, the safety function control unit 130 also includes an overspeed switch 133 of a speed governor, which is connected between the holding brake coil of the auxiliary braking device 120 and the holding brake power supply. The overspeed switch 133 acts as a redundant backup, which can be configured to disconnect a power supply of the auxiliary braking device when the speed of the elevator car exceeds a speed threshold.

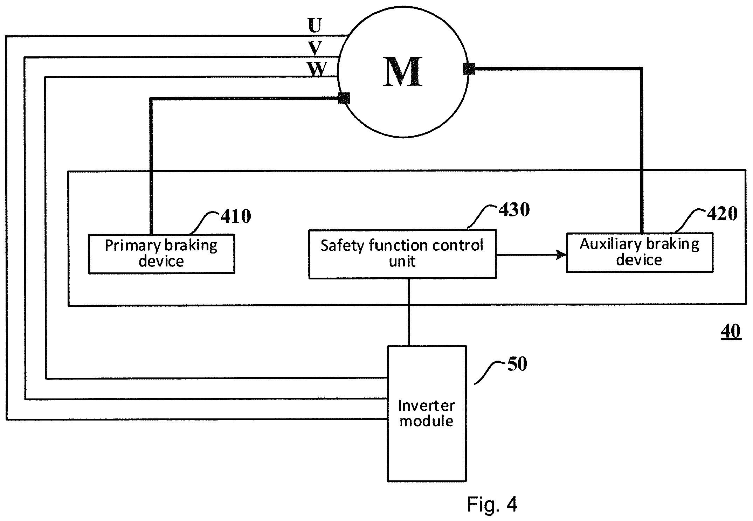

FIG. 4 is a schematic diagram of a device for implementing an elevator safety function in accordance with some other embodiments of the present application.

A device 40 for implementing the an elevator safety function shown in FIG. 4 includes a primary braking device 410, an auxiliary braking device 420, and a safety function control unit 430. The primary braking device 410 and the auxiliary braking device 420 are still actuators of the holding brake function. However, unlike the embodiments shown in FIGS. 1, 2 and 3, in the embodiment shown in FIG. 4, an inverter module of an elevator drive is used as a voltage measuring device for measuring the back electromotive force.

In some instances, when the elevator motor M and the primary braking device 410 are de-energized, the safety function control unit 430 will obtain the back electromotive force of the elevator motor M in the de-energized state from an inverter module 50 of the elevator drive (which contains, for example, a rectifying circuit consisting of reverse diodes), and judge whether the primary braking device is effective and determine whether the auxiliary braking device 420 is activated based on the magnitude of this back electromotive force. Similarly, the safety function control unit may compare the back electromotive force measured by the inverter module 50 with the set threshold, and judge that the primary braking device is not effective if the back electromotive force is greater than the set threshold, and thereby activate the auxiliary braking device 420, otherwise, judge that the primary braking device is functioning normally and puts the auxiliary braking device 420 in a non-activated state.

In some instances, once the primary braking device is de-energized, the safety function control unit 430 may start receiving the back electromotive force measurements from the inverter module 50 as soon as the primary braking device is de-energized. In other instances, the safety function control unit 430 may start receiving the back electromotive force measurements from the inverter module 50 after a delay time from the time the primary braking device is de-energized. Similarly, the above delay time may be set based on a maximum permissible travel distance of the elevator or a maximum permissible speed of the elevator motor at the time of failure of the primary braking device.

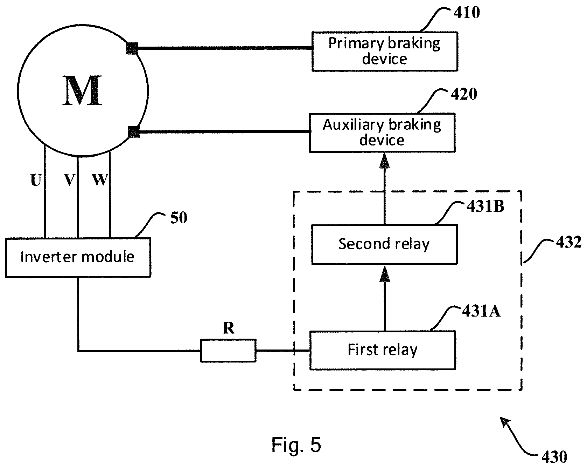

FIG. 5 shows a specific example of the device shown in FIG. 4. As shown in FIG. 5, the safety function control unit 430 includes a triggering unit 431, which is connected with an inverter module 50 via a voltage divider and current limiting resistor R. The triggering unit 431 is configured to de-energize the auxiliary braking device 420 if the output voltage V of the inverter module 50 is greater than a set threshold TH, otherwise, to energize the auxiliary braking device 420.

Exemplarily, the above functions of the triggering unit 431 may be implemented by the structure shown in FIG. 5. Specifically, the triggering unit 431 may comprise a first relay 431A and a second relay 431B. The control circuit of the first relay 431A is connected with the output end of the inverter module 50 via the voltage divider and current limiting resistor R. When the output voltage V of the inverter module is greater than the set threshold TH, it will cause the first relay 431A to generate a corresponding action, i.e., the output circuit or contacts is closed. The control circuit of the second relay 431B is connected with the output circuit of the first relay 431A and the output circuit is connected between a holding brake coil (not shown) of the auxiliary braking device 420 and a holding brake power supply (not shown), so when the output circuit of the first relay 431A or contacts is closed, it will cause the second relay 431B to generate a corresponding action, i.e., to break the connection between the holding brake coil of the auxiliary braking device 420 and the holding brake power supply. Optionally, when the output voltage V of the rectifying circuit is greater than the set threshold TH, the action generated by the first relay 431A may also be the opening of the output circuit or contacts.

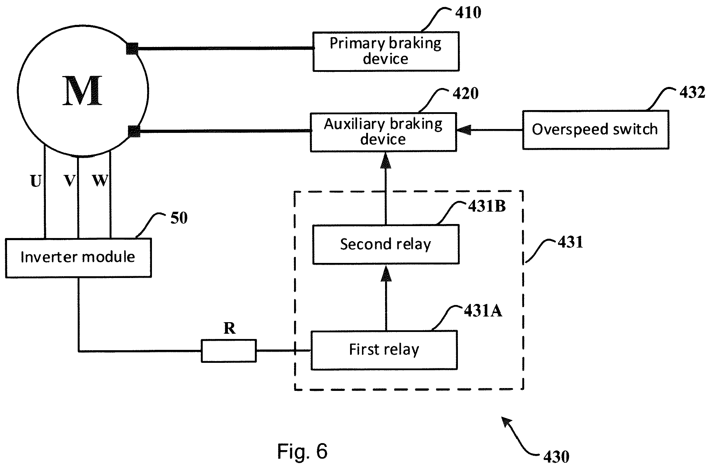

FIG. 6 shows another specific example of the device shown in FIG. 4. In contrast to the example shown in FIG. 5, in the device shown in FIG. 6, the safety function control unit 430 also includes an overspeed switch 432 of a speed governor, which is connected between the holding brake coil of the auxiliary braking device 420 and the holding brake power supply. The overspeed switch 432 acts as a redundant backup, which can be configured to disconnect a power supply of the auxiliary braking device when the speed of the elevator car exceeds a speed threshold.

In the above-mentioned embodiments, since the control logic of the switching device and the safety function control unit is implemented in hardware using basic electrical components, the reliability of the device is improved and the manufacturing costs are reduced on the one hand, while on the other hand the complex software development process and the circuit design process are eliminated. In addition, when the inverter module of the elevator drive is used as the voltage measuring device, the material cost can be further reduced.

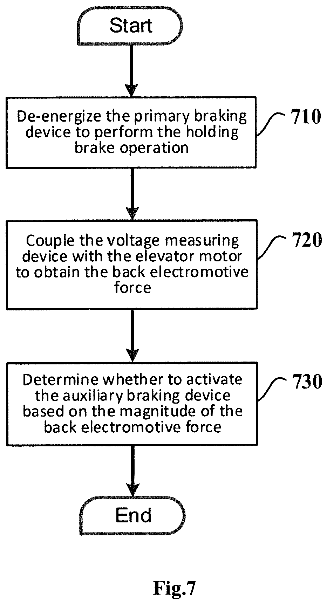

FIG. 7 is a flowchart of a method for implementing an elevator safety function in accordance with some other embodiments of the present application. Exemplarily, it is assumed that the method shown in FIG. 7 is implemented using the devices shown in FIGS. 1-6.

The method flow shown in FIG. 7 begins at step 710, in which the primary braking devices 110, 410 is de-energized in response to the elevator motor M being de-energized, for example, by de-energizing the holding brake coil to perform the holding brake operations. At this time, the auxiliary braking devices 120, 420 remain powered.

Subsequently, at step 720, in response to an event that the primary braking devices 110, 410 is de-energized, the voltage measuring device is coupled with the elevator motor M to obtain the back electromotive force of the elevator motor M.

The voltage measuring device may comprise a rectifying circuit dedicated to measuring the back electromotive force (e.g., rectifying circuit 131 in FIGS. 2 and 3), or it may comprise an inverter module of an elevator drive (e.g., inverter module 50 in FIGS. 5 and 6).

In some examples, switching devices may be used to achieve coupling between the voltage measuring device (e.g., rectifying circuit 131 in FIGS. 2 and 3) and the elevator motor after the primary braking device is de-energized. Examples of the above-mentioned switching devices include, for example, the relay shown in FIGS. 2 and 3, which comprises a relay coil connected in parallel to the holding brake coil of the primary braking device to the holding brake power supply and contacts connected with the phase lines of the elevator motor and with the voltage measuring device, wherein the contacts close immediately or close after experiencing a delay time when the relay coil is de-energized. Similarly, the delay time may be set based on a maximum permissible travel distance of the elevator or a maximum permissible speed of the elevator motor at the time of failure of the primary braking device.

After performing step 720, the process shown in FIG. 7 proceeds to step 730, in which the safety function control units 130, 430 determines whether to activate the auxiliary braking devices 120, 420 to perform the holding brake operation based on the magnitude of the back electromotive force. Exemplarily, it may be determined whether to activate the auxiliary braking device in the following manner: if the voltage measured by the voltage measuring device is greater than a set threshold, the auxiliary braking devices 120, 420 are de-energized to perform the holding brake operation.

Those skilled in the art will appreciate that the various illustrative logical blocks, modules, circuits, and algorithm steps described herein may be implemented as electronic hardware, computer software, or combinations of both.

To demonstrate this interchangeability between hardware and software, various illustrative components, blocks, modules, circuits, and steps have been described above generally in terms of their functionality. Whether such functionality is implemented in hardware or software depends on the particular application and design constraints imposed on the overall system. Those skilled in the art may implement the described functionality in changing ways for the particular application. However, such implementation decisions should not be interpreted as causing a departure from the scope of the present application.

Although only a few of the specific embodiments of the present application have been described, those skilled in the art will recognize that the present application may be embodied in many other forms without departing from the spirit and scope thereof. Accordingly, the examples and implementations shown are to be regarded as illustrative and not restrictive, and various modifications and substitutions may be covered by the application without departing from the spirit and scope of the application as defined by the appended claims.

The embodiments and examples presented herein are provided to best illustrate embodiments in accordance with the present technology and its particular application, and to thereby enable those skilled in the art to implement and use the present application. However, those skilled in the art will appreciate that the above description and examples are provided for convenience of illustration and example only. The presented description is not intended to cover every aspect of the application or to limit the application to the precise form disclosed.

## Claims

1. A device for implementing an elevator safety function, comprising:
a primary braking device configured to perform a holding brake operation when being de-energized;
an auxiliary braking device configured to perform a holding brake operation when being de-energized;
a safety function control unit selectively coupled with an elevator motor and configured to determine whether to activate the auxiliary braking device based on magnitude of back electromotive force of the elevator motor; and
a switching device configured to couple the elevator motor with the safety function control unit after the primary braking device is de-energized.

2. The device for implementing an elevator safety function of claim 1, wherein the switching device comprises a relay, the relay comprises:
a relay coil connected in parallel with a holding brake coil of the primary braking device to a holding brake power supply; and
a plurality of contacts connected with phase lines of the elevator motor and with the safety function control unit, wherein the contacts close immediately or close after experiencing a delay time when the relay coil is de-energized.

3. The device for implementing an elevator safety function of claim 2, wherein the delay time is set based on a maximum permissible travel distance of an elevator or a maximum permissible speed of the elevator motor at the time of failure of the primary braking device.

4. The device for implementing an elevator safety function of any one of claims 1-3, wherein the safety function control unit comprises:
a rectifying circuit coupled with the phase lines of the elevator motor via the switching device; and
a triggering unit coupled with the rectifying circuit configured to de-energize the auxiliary braking device if an output voltage of the rectifying circuit is greater than a set threshold.

5. The device for implementing an elevator safety function of claim 4, wherein the triggering unit comprises:
a first relay coupled with an output end of the rectifying circuit, which is configured to close or open the contacts in response to an event that the output voltage of the rectifying circuit is greater than the set threshold; and
a second relay coupled with the first relay, which is configured to disconnect the holding brake coil of the auxiliary braking device from the holding brake power supply in response to closing or opening of the contact of the first relay.

6. The device for implementing an elevator safety function of claim 4, wherein the safety function control unit further comprises an overspeed switch of a speed governor, which is connected between the holding brake coil of the auxiliary braking device and the holding brake power supply and configured to disconnect a power supply of the auxiliary braking device when a speed of an elevator car exceeds a speed threshold.

7. A device for implementing an elevator safety function, comprising:
a primary braking device configured to perform a holding brake operation when being de-energized;
an auxiliary braking device configured to perform a holding brake operation when being de-energized;
a safety function control unit coupled with an inverter module of an elevator drive, configured to obtain back electromotive force of an elevator motor from the inverter module after the primary braking device is de-energized and to determine, based on magnitude of the back electromotive force, whether to activate the auxiliary braking device.

8. The device for implementing an elevator safety function of claim 7, wherein the safety function control unit obtains the back electromotive force from the inverter module immediately or obtains the back electromotive force from the inverter module after experiencing a delay time after the primary braking device is de-energized.

9. The device for implementing an elevator safety function of claim 8, wherein the delay time is set based on a maximum permissible travel distance of an elevator or a maximum permissible speed of the elevator motor at the time of failure of the primary braking device.

10. The device for implementing an elevator safety function of any one of claims 7-9, wherein the safety function control unit comprises:
a triggering unit coupled with the inverter module configured to de-energize the auxiliary braking device if an output voltage of the inverter module is greater than a set threshold.

11. The device for implementing an elevator safety function of claim 10, wherein the triggering unit comprises:
a first relay coupled with an output end of the inverter module, which is configured to close or open the contacts in response to an event that the output voltage of the inverter module is greater than the set threshold; and
a second relay coupled with the first relay, which is configured to disconnect a holding brake coil of the auxiliary braking device from a holding brake power supply in response to closing or opening of the contact of the first relay.

12. The device for implementing an elevator safety function of claim 10, wherein the safety function control unit further comprises an overspeed switch of a speed governor, which is connected between a holding brake coil of the auxiliary braking device and a holding brake power supply and configured to disconnect a power supply of the auxiliary braking device when a speed of an elevator car exceeds a speed threshold.

13. A method for implementing an elevator safety function, comprising:
de-energizing, in response to an elevator motor being de-energized, a primary braking device to perform a holding brake operation;
coupling a voltage measuring device with the elevator motor to obtain back electromotive force of the elevator motor in response to an event of the primary braking device being de-energized; and
determining whether to activate the auxiliary braking device based on magnitude of the back electromotive force.

14. The method of claim 13, wherein a switching device is used to enable coupling between the voltage measuring device and the elevator motor after the primary braking device is de-energized, the switching device comprises a relay, the relay comprises:
a relay coil connected in parallel with a holding brake coil of the primary braking device to a holding brake power supply; and
a plurality of contacts connected with phase lines of the elevator motor and with the voltage measuring device, wherein the contacts close immediately or close after experiencing a delay time when the relay coil is de-energized.

15. The method of claim 14, wherein the delay time is set based on a maximum permissible travel distance of an elevator or a maximum permissible speed of the elevator motor at the time of failure of the primary braking device; and/or
wherein the voltage measuring device comprises an inverter module of an elevator drive; and/or
wherein the voltage measuring device comprises a rectifying circuit dedicated to measuring the back electromotive force; and/or
wherein whether the auxiliary braking device is activated is determined in the following way: if a voltage measured by the voltage measuring device is greater than a set threshold, the auxiliary braking device is de-energized.
